Europäisches Patentamt

European Patent Office

Office européen des brevets

(11) Veröffentlichungsnummer: **0 264 758**

**A1**

(12) **EUROPÄISCHE PATENTANMELDUNG**

(21) Anmeldenummer: 87114852.4

(51) Int. Cl.⁴: **G01B 5/20**

(22) Anmeldetag: **12.10.87**

(30) Priorität: **13.10.86 CH 4083/86**

(43) Veröffentlichungstag der Anmeldung:
**27.04.88 Patentblatt 88/17**

(84) Benannte Vertragsstaaten:
**AT BE DE ES FR GB GR IT LU NL SE**

(71) Anmelder: **PAV Präzisions-Apparatebau
Aktiengesellschaft
Schaaner Strasse 40
FL-9490 Vaduz(LI)**

(72) Erfinder: **Böttcher, Wolfgang,
Zürcherstrasse 37
A-6700 Bludenz(AT)**

(74) Vertreter: **Witte, Alexander, Dr.-Ing.
Schickhardtstrasse 24
D-7000 Stuttgart 1(DE)**

(54) **Wellenmessgerät.**

(57) Ein Messgerät weist Tasterhalter (18 19) zum Befestigen von Tastern (16, 16') auf, die Radialflächen (R, r) eines Drehkörpers (14) auf ihre Massgenauigkeit hin prüfen sollen. Um beim Anstellen der Taster (16, 16') durch Verschieben der sie tragenden Halteböcke (4, 5) auf die Drehachse (A) des zu untersuchenden Drehkörpers (14) zu ein Anschlagen der empfindlichen Enden der Taster (16, 16') zu vermeiden, sind die Tasterhalter (18, 19) parallel zur Drehachse (A) verschiebbar und ermöglichen so ein Ausweichen der Taster (16, 16').

Fig.1

EP 0 264 758 A1

# Wellenmessgerät

Die Erfindung bezieht sich auf ein Messgerät zum Bestimmen der Massgenauigkeit von quer zu einer Achse verlaufenden Radialflächen an einem Formkörper, mit an einem Grundgestell vorgesehenen, einander gegenüberliegenden und miteinander fluchtenden Lageranordnungen, die miteinander eine Achse für den Formkörper definieren, und mit wenigstens einem quer zu dieser Achse bewegbaren Tasterhalter, an dem wenigstens ein eine Radialfläche abfühlender Taster befestigbar ist. Unter "Formkörper" sind an sich beliebig hergestellte Körper zu verstehen; jedoch ist ein besonders bevorzugtes Anwendungsgebiet der Erfindung das Vermessen von Drehkörpern.

Messgeräte dieser Art werden dazu eingesetzt, Formwellen u. dgl. Drehkörper auf ihre Masshaltigkeit hin zu überprüfen. Der jeweils zu prüfende Drehkörper wird dann in die Lageranordnungen, meist Lagerspitzen, eingesetzt und sodann wenigstens ein taster (im allgemeinen mehrere) an die zu überprüfenden Flächen angelegt. Jeder Taster ist mit einer Messdose verbunden, die die feinen Ausschläge des an der jeweiligen Fläche anliegenden Tasters während der Drehung des Drehkörpers bzw. der Welle an einem Anzeigeinstrument deutlich macht.

Problematisch ist bei etwa radial von der Drehachse des Drehkörpers verluafenden Flächen das Anlegen des Tasters. Da der jeweilige Tasterhalter bezüglich der Drehachse in Radialrichtung bewegt werden muss, um den Taster in die jeweils gewünschte Position zu bringen, stösst der die Radialfläche abtastende Taster erst auf die Unfangsfläche und muss nun wegbewegt und auf die Radialfläche aufgesetzt werden. Dies ist, besonders bei mehreren solchen Tastern, recht mühsam. Dazu kommt die Gefahr, dass der Taster beim Auftreten auf die Umfangsfläche beschädigt oder in seiner Position verändert wird.

Der Erfindung liegt daher die Aufgabe zugrunde, ein Messgerät der eingangs genannten Art so auszubilden, dass seine Handhabung erleichtert und die Gefahr der Beschädigung des jeweiligen Tasters bzw. der Veränderung seiner Einstellage vermieden wird.

Diese Aufgabe wird erfindungsgemäß dadurch gelöst, daß der Tasterhalter in Richtung parallel zur Achse ist.

Durch die erfindungsgemässe Ausbildung können auch mehrere an einem Tasterhalter befestigte Taster gleichzeitig axial verschoben werden. Dies mag zunächst von Hand aus erfolgen worauf der Tasterhalter an den Drehkörper gebracht und der Tasterhalter wieder manuell parallel zur Drehachse derart in seine Ausgangslage zurückverschoben wird, das der bzw. die Taster sich an die zugehörige Radialfläche des Drehkörpers anlegen. Günstiger ist es allerdings, wenn für diese Bewegung ein Axialbewegungsantrieb vorgesehen ist. Dabei könnte die Axialbewegung des Tasterhalters mit der Bewegung des Tasterhalters auf den Drehkörper zu durch eine entsprechende Getriebeverbindung derart verkoppelt sein dass zunächst die Bewegung des Tasterhalters auf den Drehkörper zu (in Radialrichtung) erfolgt und dann erst durch eine Bewegung parallel zur Drehachse (Axialbewegung) das Aufsetzen der Taster an den Radialflächen erfolgt.

Weitere Einzelheiten ergeben sich an Hand der nachfolgenden Beschreibung eines in der Zeichnung schematisch dargestellten Ausführungsbeispieles. Es zeigen:

Fig. 1 eine Draufsicht auf ein erfindungsgemässes Messgerät; und

Fig. 2 eine Seitenansicht, teilweise im Schnitt nach der Linie II-II der Fig. 1.

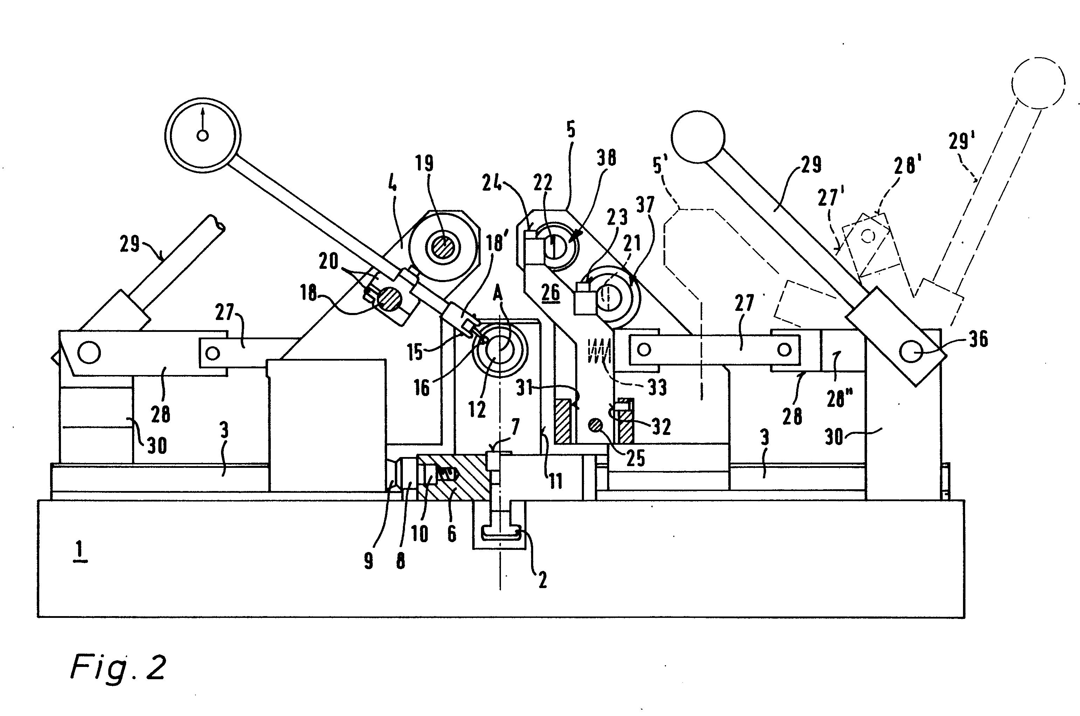

An einer Grundplatte 1 ist ein im Querschnitt umgekehrt T-förmiger Führungsschlitz 2 vorgesehen. In senkrechter Richtung zu diesem Führungsschlitz 2 verlaufen zu beiden Seiten desselben je ein Paar von Führungsschienen 3. An diesen Führungsschienen 3 sind je ein Haltebock 4 bzw. 5 verschiebbar geführt, wie dies besonders deutlich aus Fig. 2 ersichtlich ist, in der eine Anfangsposition 5' des Haltebockes 5 strichliert eingezeichnet ist.

Dagegen dient der Führungsschlitz 2 zur mittigen Befestigung verschiedener Teile Beispielsweise mag ein Abstandhalter 6 eingeschoben und mittels einer Klemmschraube 7 fixiert werden mit dessen Hilfe die Endlage der beiden Halteböcke 4, 5 im Abstand von der durch den Führungsschlitz 2 definierten Mitte bestimmt werden kann. Zu diesem Zwecke ist der Abstandhalter 6 mit durch Schrauben 10 (Fig. 2) justierbaren Endanschlägen 8 beidseitig versehen die mit entsprechenden Gegenanschlägen 9 an den Halteböcken 4, 5 zusammenwirken (in Fig. 2 ist nur der Gegenanschlag 9 des Haltebockes 4 gezeigt). Im vorliegenden Fall ist die Konstruktion der beiden Halteböcke 4, 5 spiegelbildlich symmetrisch.

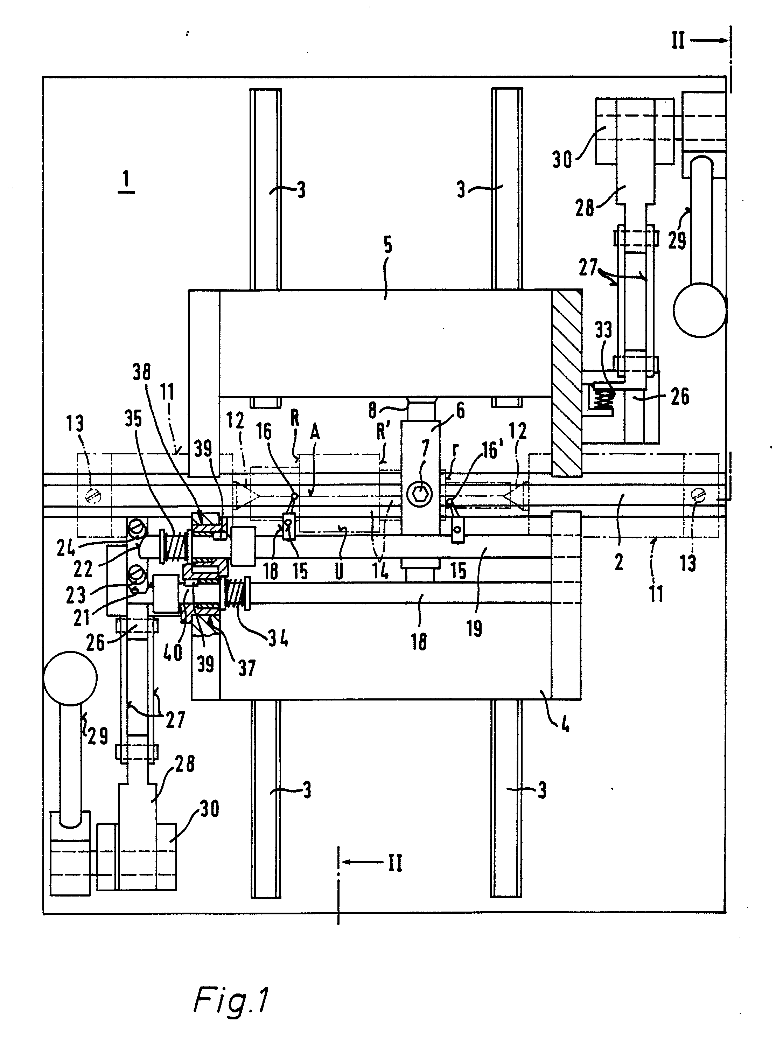

In den Führungsschlitz 2 sind ferner von beiden Seiten her Lagerböcke 11 mit je einer drehbaren Lagerspitze 12 einschiebbar und mittels mindestens einer Schraube 13 fixierbar (strich-punktiert in Fig. 1 angedeutet). Mit Hilfe der Lagerspitzen 12 kann ein zu prüfender Drehkörper 14 (strich-punktpunktiert in Fig. 1) um eine Drehachse A herum drehbar gelagert werden. Wie aus Fig. 1 hervorgeht, ist der Drehkörper 14 mehrfach abgesetzt und weist jeweils radiale Schulterflächen r, R und R' auf, deren Masshaltigkeit in Achsrichtung überprüft werden soll. Zu diesem Zwecke ist es bekannt, elastisch um eine Achse 15 schwenkbare Taster 16, 16' vorzusehen, die sich an diese Radialflächen r, R anlegen und deren Ausschlag um die Achse 15 in bekannter Weise auf ein Anzeigeinstrument 17 (Fig. 2) oder auf eine Datenverarbeitungsanlage übertragen wird.

Im Betrieb eines solchen Messgerätes wird nun erst der zu prüfende Drehkörper 14 zwischen die Lagerspitzen 12 gespannt bevor die Halteböcke 4, 5 aus ihrer Anfangslage (vgl. die Lage 5' in Fig. 2) auf den Drehkörper 14 und dessen Drehachse A zu entlang der Führungsschienen 3 verschoben werden. Dabei sind die Taster 16, 16' bereits an den Halteböcken 4, 5 an Tasterhaltern 18, 19 mit Hilfe von Klemmbügeln 20 befestigt (vgl. Fig. 2). Wenn daher der Haltebock 4 - mit Bezug auf Fig. 1 - von unten her gegen den Drehkörper 14 geschoben wird und dabei der Taster 16 gegen die Radialfläche R elastisch vorgespannt ist, so bestünde bei herkömmlicher Ausführung die Gefahr, dass das abgerundete Vorderende des Tasters 16 gegen die Umfangsfläche U des Drehkörpers 14 stösst, wobei der Taster 16 beschädigt oder aus seiner durch den Klemmbügel 20 fixierten Lage gebracht werden kann. Es ist auch verständlich, dass es einigermassen - schwierig ist, die Taster 16, 16' von Hand aus so abzuheben, dass sie auf ihre zugehörige Radialfläche r bzw. R gelangen. Ein Ausweg könnte zwar darin bestehen, die Taster 16, 16' erst dann an ihrem Tasterhalter 18 bzw. 19 zu befestigen, wenn sich dieser bereits in der in Fig. 1 ersichtlichen Endlage befindet, doch sind dann die Platzverhältnisse derart beengt, dass dies nicht bzw. nur mit grosser Mühe zu bewerkstelligen ist.

Erfindungsgemäss ist nun eine Aufsetzautomatik zum sanften Aufsetzen der Taster 16, 16' auf ihre zugehörige Radialfläche R bzw. r vorgesehen, zu welchem Zwecke die Tasterhalter 18, 19 in Richtung ihrer Längsachse, und damit parallel zur Drehachse A, verschiebbar am jeweiligen Haltebock 4 bzw. 5 gelagert sind. Somit könnte der den Taster 16 führende Tasterhalter 18 (bezogen auf Fig. 1) während der Bewegung des Haltebockes 4 so weit nach links gerückt sein, dass der Taster 16 mit Sicherheit an der Umfangsfläche U vorbeigelangt, wogegen der Taster 16' an seinem Taster halter 19 nach rechts verschoben wäre. Nach Erreichen der Endlage der Halteböcke 4, 5 könnten dann die Tasterhalter 18, 19 jeweils so verschoben werden, dass die Taster 16, 16' in Anlage an die zugehörigen Radialflächen R, r kommen.

Im dargestellten Ausführungsbeispiel ist eine Ausführungsform für die Handhabung vorgesehen. Dabei weisen die Enden der Tasterhalter 18, 19 bezüglich einer Symmetrieachse spiegelbildlich angeordnete Schrägflächen 21, 22 auf. Mit diesen Schrägflächen 21, 22 wirken zwei vorspringende Stifte 23, 24 zusammen, die an einem um eine Achse 25 schwenkbaren Hebel 26 vorragen (vgl. Fig. 1, 2). Es handelt sich dabei um ein Umlenkgetriebe, bei dem die Schwenkbewegung des Hebels 26 in eine Axialverschiebung der beiden Tasterhalter 18, 19 umgewandelt wird, und es versteht sich, dass die Anordnung auch umgekehrt werden kann, indem die Schrägflächen 21, 22 am Hebel 26 vorgesehen sind und mit den vorspringenden Enden der Tasterhalter 18, 19 zur Anlage kommen können, wie auch jedes andere Umlenkgetriebe Verwendung finden könnte.

Den Hebel 26 verbindet ein Lenker 27 mit einem Arm 28, der mit einem Betätigungshebel 29 verbunden und mit diesem an einem Lagerstück 30 schwenkbar gelagert ist. In der Anfangslage der Halteböcke 4, 5 (vgl. die Position 5'in Fig. 2) nimmt der Betätigungshebel 29 die Lage 29', der Arm 28, die Lage 28' (strichliert angedeutet in Fig. 2) ein. Wird nun der jeweilige Haltebock 4, 5 aus seiner Anfangslage gegen die Drehachse A verschoben, so stösst der Lenker 27 (links in Fig. 2) den Haltebock 4 gegen den Anschlag 8. Der Arm 28 befindet sich dann in einer Position 28" (rechts in Fig. 2). Die Taster 16,16' gelangen dabei jeweils an der Umfangsfläche des Drehkörpers 14 vorbei in den Bereich der dazugehörigen Radialflächen R,r. Wird nun der Betätigungshebel 29 weitergedrückt, dann strecken sich Arm 28 und Lenker 27 gegen die Kraft der Feder 33 in ihre Endlage (in der Zeichnung mit vollen Linien gezeigt) und verschwenken dabei den Hebel 26.

In der gestreckten Lage des Armes 28 und des Lenkers 27 ergeben sich drei Wirkungen:
-Der Hebel 26 legt sich an die Anschlagfläche 31 und hält so auch den zugehörigen Haltebock unverschiebbar fest;
-auch die Druckfeder 33 kann wegen der selbsthemmenden Wirkung dieser gestreckten Lage nicht mehr zur Wirkung kommen; und
-gleichzeitig sind die Exzenterstifte 23, 24 in der aus Fig. 1 ersichtlichen Weise an den Anfang der Schrägflächen 21, 22 gerückt, so dass die Tasterhalter 18, 19 unter Wirkung der Rückholfedern 34', 35 wieder in ihre ursprüngliche Lage gelangen und die Taster 16, 16' sanft an die Radialflächen R, r anlegen.

Es soll hier nochmals festgehalten werden, dass die Erfindung selbstverständlich nicht auf die Vermessung von Drehkörpern, bzw. von Radialflächen entlang von Drehachsen beschränkt, sondern beliebige Formkörper auch in Ruhelage vorteilhaft vermessen werden können.

Das beschriebene Ausführungsbeispiel kann noch in an Hand der Zeichnung leicht vorstellbarer Weise dadurch abgewandelt werden, dass die Schrägflächen 21g 22 - bezogen auf Fig. 1 - nicht nach oben, sondern abwärts gekehrt sind, wobei der jweils zugehörige Stift 23 bzw. 24 dementsprechend unterhalb des zugehörigen Tasterhalters 18 bzw. 19 darzustellen wäre. In diesem Falle würde eine Verschwenkung des Betätigungshebels 29 aus seiner Lage 29' (Fig. 2) im Uhrzeigergegensinne bewirken dass sich die Stifte 23, 24 gegen die Schrägflächen 21, 22 legen und diese im Sinne der beschriebenen Ausweichbewegung für die Taster 16, 16' verschieben. Da die Schrägfläche 21 jedoch an einer Nut angeordnet ist, würde der Stift 23 am Nutengrund einen Druck auf den Haltebock in Richtung auf seine Endlage ausüben und daher den Haltebock 4 bzw. 5 gegen dieselbe verschieben. Zur Vermeidung eines Verkantens an den Führungsschienen 3 mag der Betätigungshebel 29 mit einer an die jeweils andere Seite des zugehörigen Haltebockes reichenden Welle 36 verbunden sein, die dann an der gegenüberliegenden Seite in einem weiteren Lagerstück gelagert sein mag, das dem Lagerstück 30 entspricht. In einem solchen Falle kann dann an beiden Seiten jedes Haltebockes ein Lenker 27 vorgesehen sein, wobei auch der Hebel 26 an jeder Seite angeordnet werden kann, so dass ein Hebel 26 den Tasterträger 18 von der einen Seite, und der andere Hebel 26 den Tasterträger 19 von der anderen Seite über eine Schrägfläche betätigt. Dies mag den Vorteil haben, dass die Schrägflächen an beiden Tasterhaltern 18, 19 gleich ausgebildet sein können, daher die beiden Tasterhalter identisch ausgebildet sind und so die Anzahl verschiedener Teile reduziert wird.

Wenn dann die Halteböcke durch Schwenken der Betätigungshebel 29 in ihre Endlage gebracht sind, würde während dieser Bewegung die Druckfeder 33 zusammengepresst. Mit dem Loslassen des Betätigungshebels 29 käme in einem solchen Falle die Druckfeder 33 derart zur Wirkung, dass der Stift 23 aus der Nut an der Schrägfläche 21 herausgedrückt wird, so dass sich die Rückholfedern 34, 35 entspannen können und die Taster 16, 16' an ihre Radialflächen anlegen.

Die zuletzt beschriebene Möglichkeit entspräche also einer derartigen Verkoppelung der Bewegung der Halteböcke 4, 5 quer zur Drehachse A und derjenigen der Tasterhalter 18, 19 in Axialrichtung, dass sich am Ende der Bewegung der Halteböcke 4, 5 ein Anlegen der Taster an ihre Radialflächen R, r ergibt. Dies kann selbstverständlich auch durch andere mechanische (theoretisch auch elektrische oder fluidische) Antriebsverknüpfungen erreicht werden.

Im Rahmen der Erfindung sind aber noch zahlreiche weitere Varianten denkbar. So ist besonders aus Fig. 2 ersichtlich, dass der das bewegliche Vorderende, d.h. den Taster 16, tragende Kopf 18' durch seine Fixierung am Tasterhalter 18 gewissermassen selbst Bestandteil des Tasterhalters 18 wird. In diesem Sinne könnte also der Kopf 18' gegenüber einem ortsfesten Tasterhalter 18 (der dann nur Bestandteil des Haltebockes 4 ist) beweglich und auslenkbar sein, beispielsweise indem sein Klemmbügel 20 (Fig. 2) eine Schwenkachse aufweist, um die der Kopf 18' in Richtung auf die jeweilige Radialfläche R zu bzw. von dieser weg - schwenkbar ist.

Eine solche Ausbildung bringt es aber mit sich, dass das Mass der Abhebung des Tasterendes 18 von seiner Radialfläche R (bei gleichem Winkelausschlag) von der Einspannlänge im Klemmbügel 20 abhängig ist. Sind aber mehrere Taster an der Stange 18 befestigt, so wäre je nach dessen Einspannlänge der Ausschlag unterschiedlich einzustellen, so dass trotz eines allfälligen gemeinsamen Axialbewegungsantriebes (in diesem Falle: Schwenkantriebes für die Bewegung parallel zur Achse A), der an sich beliebig ausgebildet sein könnte eine gewisse mühsame Einstellarbeit nicht verhindert werden könnte. Daher ist es verständlich. dass die Axialverschiebbarkeit in Schiebeführungen 37, 38 der Halteböcke günstiger ist. Dabei ist es zweckmässig, eine Verdrehungssicherung etwa in Form von in Nuten 40 (Fig. 1) eingesetzter Feder-bzw. Schiebekeilkörper 39, vorgesehen ist, um die Lage der Schrägflächen 21, 22 gegenüber den Stiften 23, 24 (oder bei umgekehrter Anordnung mit an den Enden der Tasterhalter 18, 19 abstehenden und mit Schrägflächen am Hebel 26 zusammenwirkenden Vorsprüngen) zu sichern. Dies wird besonders dann vorteilhaft sein, wenn der Tasterhalter 18 bzw. 19 die Schrägfläche 21 bzw. 22 seines Axialbewegungsantriebes 21 - 24 trägt, da andernfalls das vorragende Ende des Tasterhalters 18 bzw. 19 selbst an einer am Hebel 26 befestigten Schrägfläche anliegen könnte.

## Ansprüche

1. Messgerät zum Bestimmen der Massgenauigkeit von quer zu einer Achse verlaufenden Radialflächen an einem Formkörper, mit an einem Grundgestell vorgesehenen, einander gegenüberliegenden und miteinander fluchtenden Lageranordnungen, die miteinander eine Achse für den Formkörper definieren, und mit wenigstens einem quer zu dieser Achse bewegbaren Tasterhalter, an dem wenigstens ein eine Radialfläche abfühlender Taster befestigbar ist, dadurch gekennzeichnet, dass der Tasterhalter (18,19) in Richtung parallel zur Achse (A) ist.

2. Gerät nach Anspruch 1, dadurch gekennzeichnet, dass ein Axialbewegungsantrieb (21-24) für die Bewegung des Taster-Halters (18 bzw. 19) vorgesehen ist.

3. Gerät nach Anspruch 2, dadurch gekennzeichnet, dass der Axialbewegungsantrieb (21-24) mit der Bewegung des Tasterhalters (18,19) quer zur Achse (A) zu einem vorgegebenem Bewegungsablauf verkoppelt ist.

4. Gerät nach Anspruch 2 oder 3, dadurch gekennzeichnet, dass der Axialbewegungsantrieb (21-24) ein Umlenkgetriebe, vorzugsweise mit einer an einen Vorsprung (23,24) angelegten Schrägfläche (21,22) aufweist.

5. Gerät nach Anspruch 4, dadurch gekennzeichnet, dass der Vorsprung (23,24) kraftschlüssig, vorzugsweise unter Federkraft (34,35) an der Schrägfläche (21,22) anliegt.

6. Gerät nach einem der vorhergehenden Ansprüche, dadurch gekennzeichnet, dass wenigstens ein Tasterhalter (18, 19) in Schiebeführungen (37 bzw.38) eines Haltebockes (4 bzw. 5) parallel zur Achse (A) verschiebbar ist.

7. Gerät nach Anspruch 6, dadurch gekennzeichnet, dass eine Verdrehungssicherung (39,40), vorzugsweise in Form wenigstens eines in eine Nut (40) eingreifenden Vorsprunges (39) an Schiebeführung und Tasterhalter (18,19), vorgesehen ist, wobei zweckmässig der Tasterhalter (18 bzw. 19) eine Schrägfläche (21 bzw. 22) eines Axialbewegungsantriebes (21-24) trägt.

*Fig.1*

Fig. 2

0 264 758

| | EINSCHLÄGIGE DOKUMENTE | | EP 87114852.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 3 905 116 (ROBERTS) <br> * Gesamt * <br><br> -- | 1,2 | G 01 B 5/20 |
| X | DE - C - 488 049 (HENSCHEL) <br> * Gesamt * <br><br> -- | 1 | |
| A | CH - A5 - 576 120 (MAHR) <br> * Gesamt * <br><br> ---- | | |

**RECHERCHIERTE SACHGEBIETE (Int. Cl.4)**

G 01 B 3/00
G 01 B 5/00
G 01 B 21/00

Der vorliegende Recherchenbericht wurde für alle Patentansprüche erstellt.

| Recherchenort | Abschlußdatum der Recherche | Prüfer |
|---|---|---|
| WIEN | 13-01-1988 | TOMASELLI |